# EUROPÄISCHE PATENTSCHRIFT

(11) **EP 2 798 942 B1**
(45) Veröffentlichungstag und Bekanntmachung des Hinweises auf die Patenterteilung: **29.11.2017**
(21) Anmeldenummer: 14001422.6
(22) Anmeldetag: 17.04.2014
(51) Int. Cl.: A01D 90/10

(54) **Landwirtschaftliches Transportfahrzeug**
Agricultural transport vehicle
Véhicule de transport agricole

(30) Priorität: 30.04.2013 DE 102013007465
(43) Veröffentlichungstag der Anmeldung: 05.11.2014
(73) Patentinhaber: Maschinenfabrik Bernard Krone GmbH, 48480 Spelle (DE)
(72) Erfinder: Horstmann, Josef, 49479 Ibbenbüren (DE)

(56) Entgegenhaltungen:
- EP-A1- 2 545 763
- DE-A1- 1 782 685
- DE-A1- 3 103 975
- DE-A1-102008 059 761
- DE-U1- 20 014 129
- DE-U1-202007 004 540
- FR-A1- 2 469 868

## Beschreibung

Die Erfindung betrifft ein landwirtschaftliches Transportfahrzeug mit einem dreiseitigen festen Laderaumaufbau, welcher durch eine heckseitige Entladeöffnung durch eine dem Laderaumboden zugeordnete Entladeeinrichtung entladen werden kann. Landwirtschaftliche Transportfahrzeuge der vorgenannten Art werden in der Landwirtschaft, insbesondere für den Transport von landwirtschaftlichen Schüttgütern eingesetzt, welche von oben in den Laderaum eingefüllt werden. Ein bevorzugter Einsatzbereich ist der Transport von gehäckseltem Erntegut, welches während der Erntefahrt eines Feldhäckslers direkt von oben in den Laderaum des durch einen Schlepper nebenher gezogenen Transportfahrzeugs übergeben wird. In einer weiteren Ausführungsform können derartige Transportfahrzeuge mit den vorgenannten Merkmalen auch zusätzlich eine Beladeeinrichtung in allgemein bekannter Art aufweisen und werden dann als Ladewagen oder Kombiwagen bezeichnet.

Aus der DE 20 2011 105 727 U1 ist ein landwirtschaftliches Transportfahrzeug bekannt, welches einen Laderaumaufbau wie zuvor beschrieben mit einem Kratzboden als Entladeeinrichtung aufweist und insbesondere für den Transport von landwirtschaftlichem Schüttgut vorgesehen ist. So wie allgemein üblich, ist auch bei diesem Fahrzeug die den Laderaum nach vorne begrenzende Vorderwand derart schräg ausgebildet, dass sich der Laderaum nach oben hin erweitert. Dadurch wird zum einen das Befüllen von oben erleichtert und des Weiteren vorteilhaft das Ladevolumen vergrößert.
Je nach Ladegut wirkt sich die Schrägstellung der Vorderwand jedoch mehr oder weniger stark nachteilig auf das Entladeverhalten aus. Je nach Ladegut und Beladeverhältnissen kann es besonders im oberen Bereich der Vorderwand durch die zusammenhängende Ladegutstruktur und durch die durch den inneren Druck auf die Seitenwände erzeugte Reibung zu Stauungen des Ladeguts beim Entladen kommen.

Dadurch bleibt dieses vom Kratzboden nicht erreichbare Ladegut zumindest zu Beginn des Entladevorganges an der Vorderwand hängen, so dass das Ladegutpaket im Vorderbereich abbröckelt und somit nicht gleichmäßig der Entladeöffnung durch den Kratzboden zugeführt wird. Dieses Verhalten bewirkt eine ungleichmäßige Entladung und verlängert die Entladezeit erheblich. Eventuell verbleiben sogar Ladegutreste an der Vorderwand und können ohne manuelles Dazutun gar nicht entladen werden.

Aus der DE 17 82 685 A1 ist ein Selbstladewagen für landwirtschaftliche Zwecke bekannt geworden, bei dem hinter einer lenkbaren Vorderachse eine Aufladevorrichtung zur Aufnahme von am Boden liegendem Erntegut angebracht ist. Dieser Aufladevorrichtung ist weiterhin in Bezug zur Fahrtrichtung ein Kratz- oder Rollboden nachgeordnet, der zusammen mit einem im vorderen Bereich des Selbstladewagens befindlichen, hochklappbaren Wagenbodenteil den nutzbaren Laderaum des Selbstladewagens bildet. Aus dieser Anordnung der jeweiligen Baugruppen des Selbstladewagens ergibt sich, dass für ein vollständige Entladung des Selbstladewagens das oberhalb von der lenkbaren Vorderachse sich befindende hochklappbare Wagenbodenteil in eine schiefe Ebene geklappt werden muss, damit das Erntegut zum Zwecke des Entladens auf den Kratz- oder Rollboden rutschen kann. Aus der Tatsache heraus, dass das Abrutschen des Erntegutes von der schiefen Ebene des Wagenbodenteils durchweg in kleineren Portionen erfolgt, ergibt sich eine unnötig lange Entladezeit. Unter Umständen kann es auch dazu kommen, dass auch größere Restmengen in Ecken des Laderaumes des Selbstladewagens festkleben und ohne manuelle Aufwendungen nicht entladen werden können.
Der Erfindung liegt daher die Aufgabe zugrunde, ein landwirtschaftliches Transportfahrzeug anzugeben, das bei verschiedensten Ladegütern und Beladeverhältnissen eine restlose und schnelle Entladung durch die dem Laderaumboden zugeordnete Entladeeinrichtung sicherstellt.
Die Aufgabe wird gelöst durch ein landwirtschaftliches Transportfahrzeug gemäß Patentanspruch 1.
Erfindungsgemäß wird ein landwirtschaftliches Transportfahrzeug für den Transport von landwirtschaftlichem Schüttgut vorgeschlagen, umfassend einen sich über Räder zum Erdboden hin abstützenden Fahrgestellrahmen zur Aufnahme eines Laderaums, gebildet aus längsseitigen, festen Seitenwänden, einer diese verbindende feste Vorderwand, einer Heckklappe zum Verschließen der rückwärtigen Entladeöffnung und einem Laderaumboden, welcher eine angetriebene Entladeeinrichtung für das rückwärtige Entladen des Ladegutes aufweist, wobei der Vorderwand innerhalb des Laderaums eine Entladehilfe zugeordnet ist, die sofort mit Beginn des Entladevorganges mit einer Kraft auf das stirnseitige Ende des Ladegutpaketes derart einwirkt, dass dieses in seiner Form zusammengehalten wird und so der Laderaumöffnung zugeführt wird. Gleichzeitig wird durch die zumindest annähernd vollflächige Abdeckung der Vorderwand durch die schwenkbeweglich angetriebene Entladehilfe ein Festhängen und Verbleiben von Ladegut an der Vorderwand wirkungsvoll verhindert. Mit dem stirnseitigen Ende, beziehungsweise vorderen Ende des Ladegutpakets ist das nach der Befüllung des Laderaums der Vorderwand zugewandte in Fahrtrichtung weisende Ende bezeichnet.
Zweckmäßigerweise ist die Entladehilfe als Gitterelement ausgebildet, das einerseits die Durchsicht von vorne in den Laderaum ermöglicht, aber andererseits einen Abstand der Gitterstäbe aufweist, welcher das schüttgutförmige Ladegut sicher zusammenhält. Erfindungsgemäß ist erkannt worden, dass besonders zu Beginn des Entladevorgangs durch den Kratzboden die Reibung zwischen Ladegut und Seitenwand die Vorschubbewegung des Ladeguts im oberen Bereich des Laderaums erschwert bzw. sogar verhindert. Es galt also, besonders in diesem Bereich eine Unterstützung der Vorschubbewegung bereitzustellen.

Die konstruktiv zu bevorzugende Ausgestaltung sieht deshalb eine Entladehilfe vor, welche möglichst vollflächig, aber insbesondere auf den oberen Bereich der vorderen Stirnseite des Ladeguts derart einwirkt, dass mit Beginn des Entladevorgangs durch den Anlauf des Kratzbodens sofort das gesamte Ladegut als Paket in Bewegung in Richtung hinterer Entladeöffnung versetzt wird.

Gemäß einer konstruktiv einfachen Umsetzung ist die Entladehilfe in ihrem unteren, dem Laderaumboden zugewandten Bereich in Lagern schwenkbar angeordnet. Der Verstellantrieb wirkt vorteilhaft im oberen Bereich der Entladehilfe auf diese ein. Bevorzugt ist vorgesehen als Antriebe Hydraulikzylinder zu verwenden. Weitere Antriebslösungen wie beispielsweise elektrische Stell- oder Schwenkantriebe sind ebenfalls möglich. Die Ansteuerung des Antriebs ist in einer einfachen Ausführung manuell vom Schlepperfahrer oder in einer komfortableren Ausführung durch eine Steuereinrichtung automatisch im Entladeablauf denkbar. Die automatische Ansteuerung der Entladehilfe könnte in Abhängigkeit weiterer Funktionen, wie dem Kratzbodenanlauf erfolgen. Da die Entladehilfe nur in einer Richtung mit einer Kraft auf das Ladegut einwirkt, kann die Rückwärtsbewegung bis zur Wideranlage an die Vorderwand relativ kraftlos erfolgen. Bei einem Antrieb mit Hydraulikzylindern ist eine einfache und kostengünstige einfach wirkende Ausführung mit Federrückzug zweckmäßig und ausreichend.

Eine besonders vorteilhafte Weiterbildung der Erfindung sieht eine Antriebslösung in Verbindung mit der hydraulischen Betätigung der Heckklappe des Transportfahrzeugs vor. Dabei werden beim Öffnen der Heckklappe gleichzeitig Hydraulikspeicher gefüllt, die in Verbindung mit den einfach wirkenden Hydraulikzylindern der Entladehilfe stehen, wodurch die Entladehilfe bereits jetzt Druck auf das Ladegut ausübt. Beim folgenden Anlauf des Kratzbodens wird insbesondere das Ladegut im oberen Bereich der Vorderwand in Richtung Entladeöffnung gedrückt, wodurch sich das gesamte Ladegut wie ein Paket in Richtung Entladeöffnung in Bewegung setzt und nicht an der vorderen Stirnseite abbröckelt. Mit dem Umschalten der Hydrauliksteuerung zum Schließen der Heckklappe entweicht auch der Restdruck aus den Hydraulikspeichern, wodurch dann die Rückstellkraft von weiteren Kraftspeichern, vorzugsweise in Form von Spiralfedern, an der Entladehilfe groß genug ist, um diese wieder in ihre Ausgangsstellung an die Vorderwand zu verschwenken.

Gemäß einer alternativen Ausführungsform des Transportfahrzeugs als Ladewagen, könnte die Entladehilfe vorteilhaft auch zusätzlich noch als Sensorelement für eine Belade- und/oder Pressdruckregelung dienen.

Da die Entladehilfe vorzugsweise in einer stabilen Gitterausführung zumindest nahezu die gesamte Vorderwand abdeckt, nimmt sie auch insbesondere in der Ausführungsform Ladewagen den Druck des Ladeguts auf, welcher sonst auf die Vorderwand wirkt. Dadurch kann die Vorderwand konstruktiv wesentlich einfacher und leichter gestaltet werden, was wiederum den Mehraufwand der Entladehilfe zumindest teilweise kom-pensiert. In Verbindung mit Ausführungsformen von Transportfahrzeugen beziehungsweise Ladewagen mit mehrteiligen Vorderwänden, wie sie in Versionen mit einem oberen abklappbaren Bereich bekannt sind, ist die Entladehilfe in der Größe dem unteren festen Vorderwandbereich angepasst. Derartige Vorderwandausführungen mit einem oberen verschwenkbaren Bereich sind vorteilhaft bei einer Beladesituation von vorne, wie sie beispielsweise auftritt, wenn das Transportfahrzeug beim sogenannten Anhäckseln hinter einem Feldhäcksler gezogen wird.

Das Ergebnis der Erfindung ist somit ein landwirtschaftliches Transportfahrzeug, welches mit geringen Mitteln eine wesentlich verbesserte Entladung sicherstellt.

Die Erfindung wird im Folgenden anhand der Zeichnung eines Ausführungsbeispiels nach der Erfindung näher erläutert.
**Fig.1** der Zeichnung zeigt eine schematische, geschnittene Seitenansicht eines erfindungsgemäßen landwirtschaftlichen Transportfahrzeugs;
**Fig. 2** zeigt eine Perspektivdarstellung des Transportfahrzeugs aus Fig. 1, wobei die Entladehilfe in einer verschwenkten Betriebsstellung dargestellt ist;
**Fig. 3** zeigt den Hydraulikschaltplan zu der Entladehilfe des landwirtschaftlichen Transportfahrzeugs des Ausführungsbeispiels der Figuren 1 und 2.

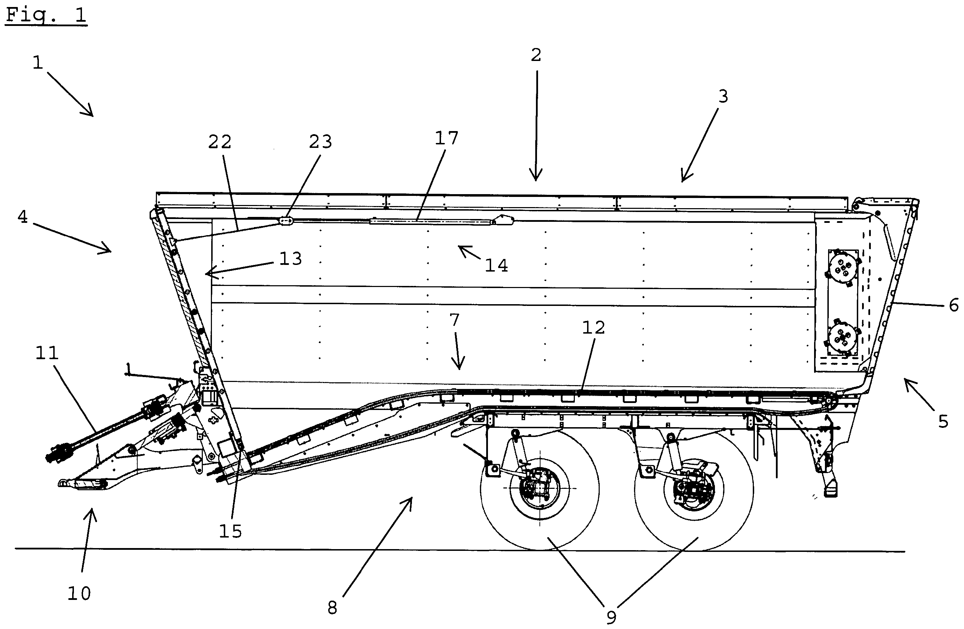

Fig. 1 stellt ein Ausführungsbeispiel eines landwirtschaftlichen Transportfahrzeugs 1 nach der Erfindung dar. Zur besseren Erkennbarkeit der erfindungsrelevanten Baugruppen wird das Fahrzeug als Seitenansicht in einem Längsschnitt gezeigt. Das landwirtschaftliche Transportfahrzeug 1 weist einen Laderaum 2 auf,der durch feste Seitenwände 3, eine die Seitenwände 3 verbindende feste Vorderwand 4, eine die heckseitige Entladeöffnung 5 verschließende, verschwenkbare Heckklappe 6 und einen den Laderaum 2 nach unten begrenzenden Laderaumboden 7 ausgebildet ist. Der Laderaum 2 stützt sich über einen Fahrgestellrahmen 8 und Räder 9 zum Erdboden ab. Über die Zugdeichsel 10 wird das landwirtschaftliche Transportfahrzeug 1 für den Transport an ein nicht dargestelltes Zugfahrzeug angehängt und über die Antriebswelle 11 mechanisch angetrieben.

Dem Laderaumboden 7 des landwirtschaftlichen Transportfahrzeugs 1 des Ausführungsbeispiels ist eine Entladeeinrichtung in allgemein bekannter Ausführung als Kratzboden 12 zugeordnet, wobei der Laderaumboden 7 des Ausführungsbeispiels als vorteilhafte Besonderheit einen im vorderen Bereich des Laderaums 2 abgesenkten Laderaumboden 7 aufweist. Diese Besonderheit ist bereits aus der DE 20 2011 105727 U1 des Anmelders bekannt und für das erfindungsgemäße Transportfahrzeug 1 nicht erfindungsrelevant. Ausführungsformen mit gerade durchlaufendem Laderaumboden 7 und auch landwirtschaftliche Transportfahrzeuge in einer Ausführung als Ladewagen mit einem frontseitigen Aufnahme- und Ladeaggregat zur Beladung des Laderaums 2 durch eine Beladeöffnung im Laderaumboden 7 im Bereich der Vorderwand sind ebenfalls gattungsgemäß und fallen unter den Schutz der Patentansprüche.

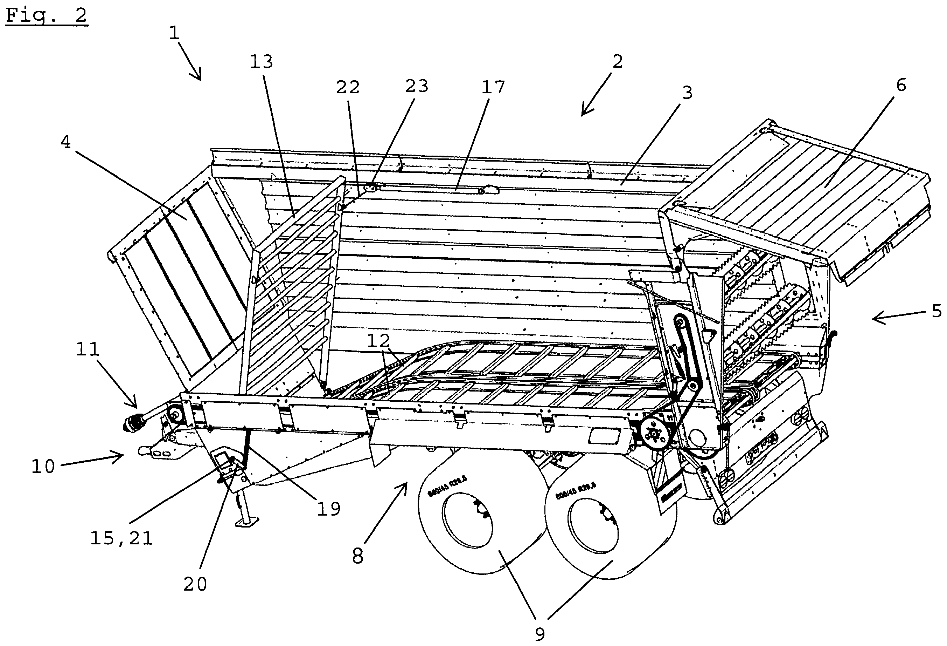

Als erfindungswesentliche Merkmale zeigt Fig. 1 und insbesondere Fig. 2 eine der Vorderwand 4 zugeordnete Entladehilfe 13 und die dazugehörige Antriebseinrichtung 14. Die im Ausführungsbeispiel als flaches Gitterelement ausgebildete Entladehilfe 13 deckt mit ihren Ausmaßen die Vorderwand 4 nahezu vollständig ab und ist an ihrem unteren, dem Laderaumboden 7 naheliegendem Ende in einer horizontalen Querachse 15 schwenkbeweglich gelagert.

Fig. 1 zeigt die Entladehilfe 13 in ihrer Grundstellung zur Beladung des Transportfahrzeugs 1, in der sie an der Vorderwand 4 anliegt. Fig. 2 zeigt die verschwenkte Betriebsstellung, die die Entladehilfe 13 am Ende ihrer Unterstützung des Entladevorgangs einnimmt. Die Antriebseinrichtung 14 der Entladehilfe 13 ist bei dem landwirtschaftlichen Transportfahrzeug 1 des Ausführungsbeispiels hydraulisch betätigt und in Abhängigkeit der hydraulischen Heckklappenbetätigung gesteuert.

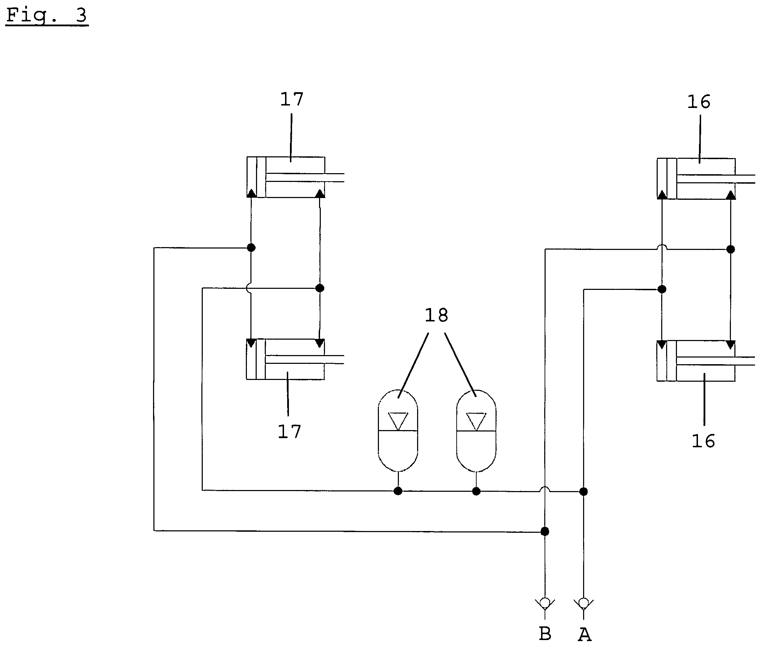

Fig. 3 zeigt dazu den Hydraulikschaltplan, wobei die Verbindungen der Heckklappenzylinder 16 mit den Zylindern 17 der Entladehilfe und die Zuordnung von hydraulischen Kraftspeichern 18 übersichtlich dargestellt ist.

Wenn durch Auslösung des Vorgangs Heckklappe 6 öffnen der Anschluss A durch entsprechende Ventilschaltung mit Druck beaufschlagt wird, fahren die Heckklappenzylinder 16 aus. Gleichzeitig und vor allem mit dem Erreichen der Endlage der Heckklappenzylinder pflanzt sich der Druck in den hydraulischen Kraftspeicher 18 und Antriebszylindern 17 der Entladehilfe fort. Da in der Regel in dieser Situation der Laderaum 2 gefüllt ist und sich die Entladehilfe 13 in der Grundstellung befindet, sind die Kolbenstangen der Zylinder 17 der Entladehilfe 13 ausgefahren. Der durch das Öffnen der Heckklappe 6 auch an den Zylindern 17 anstehende Druck bewirkt eine Kraftausübung der Entladehilfe 13 auf das Ladegut des gefüllten Laderaums 2. Mit der nun einsetzenden Vorschubbewegung des Kratzbodens 12 wird die gesamte Laderaumfüllung als komplettes Paket unterstützt durch die Entladehilfe 13 in Richtung Entladeöffnung 5 in Bewegung gesetzt. Durch die in den hydraulischen Kraftspeichern 18 gespeicherte Energie erfolgt die Unterstützung der Entladehilfe 13 über ihren gesamten Verschwenkweg, bis das die Kolbenstangen der Zylinder 17 eingefahren sind.

Nach Beendigung des Entladevorgangs wird zur Schließung der Heckklappe 6 der Anschluss B mit Druck beaufschlagt, wobei am Anschluss A das Hydrauliköl drucklos entweichen kann. Die Heckklappe 6 wird geschlossen, die Zylinder 17 der Entladehilfe 13 fahren wieder in die Grundstellung aus und die Hydraulikspeicher 18 können sich restlos entleeren.

Durch eine vorteilhafte Besonderheit der Antriebseinrichtung des beschriebenen Ausführungsbeispiels wird die Entladehilfe 13 jedoch nicht direkt durch die Zylinder 17 wieder in ihre Grundstellung verbracht. Dies erfolgt durch weitere Kraftspeicher in der Art von Zugfedern 19, die außerhalb des Laderaums 2 über Schwenkhebel 20 mit den nach außen geführten Querachsstummeln 21 der Schwenklagerung der Entladehilfe 13 verbunden sind.

Die Entladehilfe 13 ist mit den Zylindern 17 über Seile 22 verbunden, welche über kolbenstangenseitige Umlenkrollen 23 derart geführt werden, dass sich ein Übersetzungsverhältnis von Kolbenstangenweg zu dem Verschwenkweg der Entladehilfe 13 auf gleicher Höhe von 1 : 2 ergibt. Durch diese konstruktive Ausgestaltung brauchen die Zylinder 17 vorteilhaft nur den halben Kolbenstangenhub aufweisen.

Fig. 2 zeigt die Details der Antriebseinrichtung 14 der Entladehilfe 13 besonders deutlich.

## Patentansprüche

1. Landwirtschaftliches Transportfahrzeug (1) für den Transport von landwirtschaftlichem Schüttgut, umfassend einen sich über Räder (9) zum Erdboden hin abstützenden Fahrgestellrahmen (8) zur Aufnahme eines Laderaums (2), gebildet aus längsseitigen festen Seitenwänden (3), einer diese verbindende feste Vorderwand (4), einer Heckklappe (6) zum Verschließen der rückwärtigen Entladeöffnung (5) und einem Laderaumboden (7), welcher eine angetriebene Entladeeinrichtung (12) für das rückwärtige Entladen des Ladegutes aufweist, wobei der Vorderwand (4) innerhalb des Laderaums (2) eine Entladehilfe (13) zugeordnet ist, **dadurch gekennzeichnet, dass** die Entladehilfe (13) sofort mit Beginn des Entladevorganges mit einer Kraft auf das stirnseitige Ende des Ladegutpaketes derart einwirkt, dass dieses in seiner Form zusammengehalten wird und so der Laderaumöffnung (5) zugeführt wird.

2. Landwirtschaftliches Transportfahrzeug (1) nach Anspruch 1, **dadurch gekennzeichnet, dass** die Entladehilfe (13) eine Antriebseinrichtung (14) aufweist, um kraftbetätigt auf das Ladegut einzuwirken.

3. Landwirtschaftliches Transportfahrzeug (1) nach Anspruch 2, **dadurch gekennzeichnet, dass** die Antriebseinrichtung (14) der Entladehilfe (13) vorzugsweise hydraulisch betätigt ist.

4. Landwirtschaftliches Transportfahrzeug (1) nach zumindest einem der Ansprüche 2 oder 3, **dadurch gekennzeichnet, dass** die Antriebseinrichtung (14) der Entladehilfe (13) in Abhängigkeit zu einem hydraulischen Antrieb der Heckklappe (6) steht.

5. Landwirtschaftliches Transportfahrzeug (1) nach zumindest einem der vorhergehenden Ansprüche, **dadurch gekennzeichnet, dass** die Entladehilfe (13) als um eine quer zur Fahrtrichtung ausgerichtete, horizontale Schwenkachse (15) verschwenkbares, flächiges Element ausgebildet ist.

6. Landwirtschaftliches Transportfahrzeug (1) nach Anspruch 5, **dadurch gekennzeichnet, dass** die Entladehilfe (13) als Gitterrahmen ausgebildet ist.

7. Landwirtschaftliches Transportfahrzeug (1) nach zumindest einem der Ansprüche 5 oder 6, **dadurch gekennzeichnet, dass** die als flächiges Element ausgebildete Entladehilfe (13) derart der Vorderwand (4) zugeordnet ist, dass sie in ihrer größten Ausdehnung den vorderen Stirnbereich des Laderaumes (2) mit ihrer Wirkung zumindest annähernd abdeckt.

8. Landwirtschaftliches Transportfahrzeug (1) nach zumindest einem der vorhergehenden Ansprüche, **dadurch gekennzeichnet, dass** das landwirtschaftliche Transportfahrzeug (1) als Ladewagen mit einem frontseitigen Lade- und Förderaggregat zur Aufnahme und Weiterleitung von am Boden liegendem Ladegut durch einen im unteren Vorderwandbereich in den Laderaum (2) mündenden Förder- und Presskanal ausgebildet ist.

## Claims

1. Agricultural transport vehicle (1) for transporting agricultural bulk material, comprising a chassis frame (8) that is supported with respect to the soil by wheels (9) and is intended for receiving a loading compartment (2) that is formed of longitudinal solid side walls (3), a solid front wall (4) that interconnects said walls, a hatch (6) for closing the rearward unloading opening (5), and a loading compartment base (7) that comprises a driven unloading device (12) for unloading the loading material to the rear, the front wall (4) being associated with an unloading aid (13) within the loading compartment (2), **characterised in that**, as soon as the unloading process begins, the unloading aid (13) acts on the end face of the pile of loading material by means of a force such that said pile is held together in the shape thereof and is thus fed to the loading compartment opening (5).

2. Agricultural transport vehicle (1) according to claim 1, **characterised in that** the unloading aid (13) comprises a drive device (14) in order to act on the loading material in a power-operated manner.

3. Agricultural transport vehicle (1) according to claim 2, **characterised in that** the drive device (14) of the unloading aid (13) is preferably operated hydraulically.

4. Agricultural transport vehicle (1) according to at least one of claims 2 or 3, **characterised in that** the drive device (14) of the unloading aid (13) is dependent on a hydraulic drive of the hatch (6).

5. Agricultural transport vehicle (1) according to at least one of the preceding claims, **characterised in that** the unloading aid (13) is designed as a planar element that is pivotable about a horizontal pivot axis (15) transverse to the direction of travel.

6. Agricultural transport vehicle (1) according to claim 5, **characterised in that** the unloading aid (13) is designed as a grate frame.

7. Agricultural transport vehicle (1) according to at least one of claims 5 or 6, **characterised in that** the unloading aid (13) designed as a planar element is associated with the front wall (4) in such a way that, by being extended to the furthest extent, said unloading aid covers at least approximately all of the front end region of the loading compartment (2).

8. Agricultural transport vehicle (1) according to at least one of the preceding claims, **characterised in that** the agricultural transport vehicle (1) is designed as a loader wagon having a front-side loading and conveying unit for receiving and transferring loading material lying on the ground by means of a conveyance and compression channel that leads into the loading compartment (2) in the lower front wall region.

## Revendications

1. Véhicule de transport agricole (1) destiné au transport de produits agricoles en vrac comportant un cadre de châssis (8) s'appuyant sur le sol par l'intermédiaire de roues (9) destiné à recevoir un volume de chargement (2) formé de deux parois latérales longitudinales fixes (3), d'une paroi avant fixe (4) reliant celles-ci, et d'un capot arrière (6) permettant de fermer l'ouverture de déchargement arrière (5) ainsi que d'un fond de volume de chargement (7) qui comporte un dispositif de déchargement entraîné (12) pour permettre le déchargement par l'arrière des produits chargés, à la paroi avant (4) étant associé à la partie interne du volume de chargement (2) un élément d'assistance au déchargement (13),
**caractérisé en ce que**
dès le début du processus de déchargement, l'élément d'assistance au déchargement (13) exerce une force sur l'extrémité frontale du paquet de produits chargés de sorte que celui-ci soit rassemblé en forme et transféré ainsi vers l'ouverture du volume de chargement (5).

2. Véhicule de transport agricole (1) conforme à la revendication 1,
**caractérisé en ce que**
l'élément d'assistance au déchargement (13) comprend un dispositif d'entraînement (14) pour agir sur les produits chargés en étant actionné par une énergie externe.

3. Véhicule de transport agricole (1) conforme à la revendication 2,
**caractérisé en ce que**
le dispositif d'entraînement (14) de l'élément d'assistance au déchargement (13) est de préférence actionné hydrauliquement.

4. Véhicule de transport agricole (1) conforme à au moins l'une des revendications 2 et 3,
**caractérisé en ce que**
le dispositif d'entraînement (14) de l'élément d'assistance au déchargement (13) est dépendant d'un entraînement hydraulique du capot arrière (6).

5. Véhicule de transport agricole (1) conforme à au moins l'une des revendications précédentes,
**caractérisé en ce que**
l'élément d'assistance au déchargement (13) est réalisé sous la forme d'un élément plat susceptible de pivoter autour d'un axe de pivotement horizontal (15) orienté transversalement à la direction de déplacement.

6. Véhicule de transport agricole (1) conforme à la revendication 5,
**caractérisé en ce que**
l'élément d'assistance au déchargement (13) est réalisé sous la forme d'un cadre en treillis.

7. Véhicule de transport agricole (1) conforme à au moins l'une des revendications 5 ou 6,
**caractérisé en ce que**
l'élément d'assistance au déchargement (13) réalisé sous la forme d'un élément plat est associé à la paroi avant (4) de sorte qu'il recouvre au moins approximativement par son action, dans sa plus grande extension, la zone frontale avant du volume de chargement (2).

8. Véhicule de transport agricole (1) conforme à au moins l'une des revendications précédentes,
**caractérisé en ce qu'**
il est réalisé sous la forme d'un chariot de chargement équipé d'un ensemble de chargement et de transport frontal destiné à recevoir et à transférer des produits reposant sur le sol par l'intermédiaire d'un canal de transport et de compression débouchant dans l'espace de chargement (2) dans la zone inférieure de la paroi avant.
